# EUROPEAN PATENT APPLICATION

(11) **EP 3 208 553 A1**
(43) Date of publication of application: **23.08.2017**
(21) Application number: 16002032.7
(22) Date of filing: 19.09.2016
(51) Int. Cl.: F24J 2/54

(54) **ADJUSTABLE ANGLE SOLAR POWER GENERATION SYSTEM**

(30) Priority: 22.02.2016 JP 2016030567
(71) Applicant: Jenc Corporation, Kyoto 615-8282 (JP)
(72) Inventor: Yanagi, Tomio, Kyoto, 615-8282 (JP)
(74) Representative: Hering, Hartmut

(57) **Abstract**

Provided is an adjustable angle solar power generation system that can decrease a tilt control angle of a solar panel without narrowing a range where the sun is tracked. The system includes a supporting portion that supports a solar panel so as to be capable of being swung within a range in which the solar panel is tilted at an arbitrary angle in only one direction from a horizontal state, and a revoluting portion that supports the supporting portion from below so as to be rotatable around a vertical axis. The revoluting portion supports the supporting portion so as to be rotatable in such a manner that a swing range of the solar panel is reversed with the vertical axis being defined as a symmetric axis, enabling the solar panel to swing in both directions within the same range before and after the rotation of the revoluting portion.

## Description

### BACKGROUND OF THE INVENTION

### (1) Field of the Invention

The present invention relates to an adjustable angle solar power generation system which varies an angle of a solar panel within a predetermined angular range.

### (2) Description of Related Art

Recently, the mainstream in a solar power generation system is a fixed type in which a solar panel is fixed on a roof or a base, wherein an angle of a light-receiving surface is fixed. Therefore, the time at which the sunlight is vertically incident to provide the highest power generation efficiency is limited.

In order to solve this problem, a sun-tracking solar power generation system that controls to vary an angle of a solar panel so as to track the movement of the sun has been proposed. The tracking solar power generation system described above can adjust the light-receiving surface of the solar panel at an angle which enables vertical incidence of the sunlight or at an angle close to this angle, whereby the power generation amount becomes larger than that of the fixed type.
Patent Document 1: Japanese Translation of PCT Publication No. 2014-522624
Patent Document 2: Japanese Open Gazette No.2011-253997
Patent Document 3: Japanese Open Gazette No 2011-35337
Patent Document 4: Japanese Open Gazette No 2003-324210
Patent Document 5: Japanese Open Gazette No 2001-91818
Patent Document 6: Japanese Patent No. 5057412
Patent Document 7: Japanese Patent No. 4873279
Patent Document 8: Japanese Patent No. 3539729

In a tracking solar power generation system in which the center of a solar panel is supported on a base through a rotation axis to vary the tilt angle of the solar panel during the day according to the tilt of the sun, in the case where the solar panel is tilted to the east and to the west each at an angle of a maximum of 45 degrees, for example, the tilt (swing) of the solar panel has been conventionally controlled within the range of 90 degrees in total, that is, from the state in which the solar panel is tilted at an angle of 45 degrees to the east at sunrise to the state in which the solar panel is tilted at an angle of 45 degrees to the west at sunset. However, in consideration of the weight of the solar panel or the load to the rotation axis with wind, it is preferable that the tilt control angle (rotation angle) of the solar panel is set as small as possible.

In addition, comparing the operation for bringing the solar panel tilted at an angle of 45 degrees into a horizontal state and the operation for bringing the solar panel in the horizontal state into the state of being tilted at an angle of 45 degrees using a motor as a power source, the former operation for raising up the solar panel tilted to one side to the horizontal state requires larger torque (power consumption) than the latter operation for tilting the solar panel in the horizontal state to the opposite side. Conventionally, the operation for raising up the solar panel is performed at least twice during 24 hours, that is, between sunrise and noon and after sunset, which is a period in which the solar panel tilted at an angle of 45 degrees to the west is raised to the horizontal state during the operation for tilting the solar panel at an angle of 45 degrees to the east for preparation of the power generation of the next day. Therefore, there is a room for improvement from the viewpoint of the power consumption of the motor.

As for the above-mentioned point, if the maximum tilt angle of the solar panel to one side is decreased from 45 degrees to 30 degrees, the tilt control angle of the solar panel can be decreased. However, if so, the range where the sun is tracked (the range where the solar panel faces the sunlight) is narrowed, which decreases the power generation amount. This deteriorates the technical meaning in designing the sun tracking type.

### SUMMARY OF THE INVENTION

The present invention is accomplished in view of the foregoing problem, and an object of the present invention is to provide an adjustable angle solar power generation system that can decrease a tilt control angle of a solar panel without narrowing a range where the sun is tracked.

In order to achieve the foregoing object, the present invention uses a configuration including a supporting portion that supports a solar panel so as to be capable of being swung within a range in which the solar panel is tilted at an arbitrary angle in only one direction from a horizontal state; and a revoluting portion that supports the supporting portion from below so as to be rotatable around a vertical axis.

According to the configuration described above, the supporting portion swings the solar panel only in one direction on one side, whereby the tilt control angle can be decreased. On the other hand, if the supporting portion is rotated 180 degrees in the horizontal direction by the revoluting portion, the solar panel is also rotated 180 degrees, and the swing range is reversed. Thus, the solar panel can be swung to both sides within the same angular range before and after the reverse operation. Accordingly, if the arbitrary set tilt angle is set to a maximum of 45 degrees, for example, the sun can be tracked within the angular range of 90 degrees in total, which is the same as the sun tracking range of the conventional system.

How to control the supporting portion or the revoluting portion, such as the setting of the tilt angle of the solar panel by the supporting portion or the rotation angle of the revoluting portion, is arbitrary. However, in order to track the movement of the sun in the day, the revoluting portion is preferably configured to support the supporting portion so as to be rotatable in such a manner that the swing range of the solar panel can be reversed with the vertical axis being defined as a symmetric axis, enabling the solar panel to swing in both directions within the same range before and after the rotation of the revoluting portion. More specifically, the revoluting portion is preferably rotatable within the range of 180 degrees in normal and reverse directions around the vertical axis.

In addition, the drive control of the supporting portion and the revoluting portion is arbitrary. However, if the revoluting portion is rotationally driven when the solar panel is in the horizontal state, the supporting portion can be rotated in the state where air resistance by the solar panel is the minimum. On the other hand, if the supporting portion and the revoluting portion are simultaneously driven, the solar panel can more effectively face the sunlight in the season from autumn to spring when the culmination altitude of the sun is lower than in the season from spring to autumn.

Preferably, as the specific configuration example, the supporting portion includes: a rotation axis provided at a center of a back of the solar panel; a lever-shaped actuator that integrally projects from the rotation axis obliquely downward and performs a reciprocating movement to the left and right to allow the solar panel to swing; and a power source for the supporting portion, the power source operating the actuator so as to be capable of performing the reciprocating movement, and the actuator projects from the rotation axis so as to form an acute angle with a panel surface which is swung downward when the solar panel is swung. Specifically, when the actuator is provided vertical to the panel surface, the actuator performs the reciprocating movement at one side within the range from the center of the panel while the solar panel is swung within the angular range. When being angled, the actuator can perform the reciprocating movement to the left and right from the center of the panel within the same angular range, and the structure for transmitting power from the power source for the supporting portion to the actuator can be made symmetrical.

On the other hand, as the specific configuration example, the revoluting portion preferably includes: a rotary drum that supports the supporting portion on a cylinder so as to be rotatable in a horizontal direction; a roller that has an outer peripheral surface in contact with a cylinder wall of the rotary drum and is freely rotatable in the horizontal direction; and a power source for the revoluting portion, the power source applying power to the roller to rotationally drive the rotary drum.

In addition, if the rotary drum is formed into a hollow cylindrical shape, and the roller is mounted inside the rotary drum, the roller can be protected from rain and wind, whereby the deterioration of the roller can be prevented.

Further, if a reinforcement drum is concentrically mounted at the outside of the rotary drum through a bearing, collapse of the rotary drum can be prevented by the reinforcement drum, whereby resistance to wind of the entire system can be enhanced.

The present invention allows a solar panel to swing in one direction on one side from a horizontal state. Therefore, as compared with the conventional system that allows a solar panel to swing within the whole range on both sides, a tilt control angle of the solar panel can be reduced by half, whereby the rotation control of the solar panel can be simplified and power saving can be achieved. Further, since the present invention includes the revoluting portion that can reverse the solar panel, the present invention enables tracking of the sun in the same range as the conventional system with the reduced tilt control angle.

### BRIEF DESCRIPTION OF THE DRAWINGS

Fig. 1 is a perspective view showing a solar power generation system according to one embodiment of the present invention;
Fig. 2 is a side sectional view of the solar power generation system according to the embodiment;
Fig. 3 is a brief explanatory view of a supporting portion 2 according to the embodiment;
Fig. 4 is a perspective view of the supporting portion 2 according to the embodiment;
Fig. 5 is a partially cutout view of a revoluting portion 3 according to the embodiment;
Fig. 6 is a plan view of the revoluting portion 3 according to the embodiment;
Fig. 7 is a side sectional view of the revoluting portion 3 according to the embodiment;
Fig. 8 is a sectional view showing a reinforcement structure of the revoluting portion 3 according to the embodiment; and
Fig. 9 is a side sectional view showing a modification of the revoluting portion 3 according to the embodiment.

### DETAILED DESCRIPTION OF PREFERRED EMBODIMENT

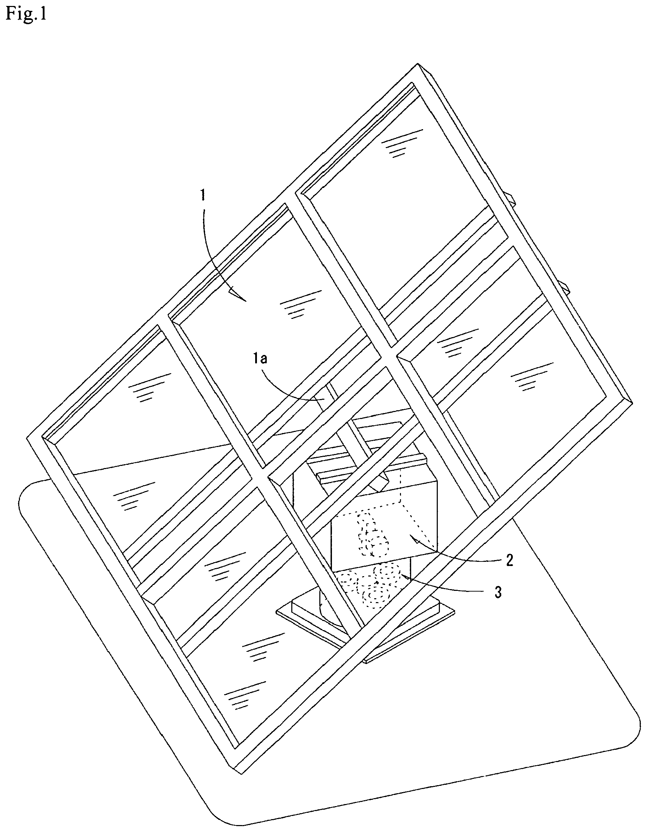

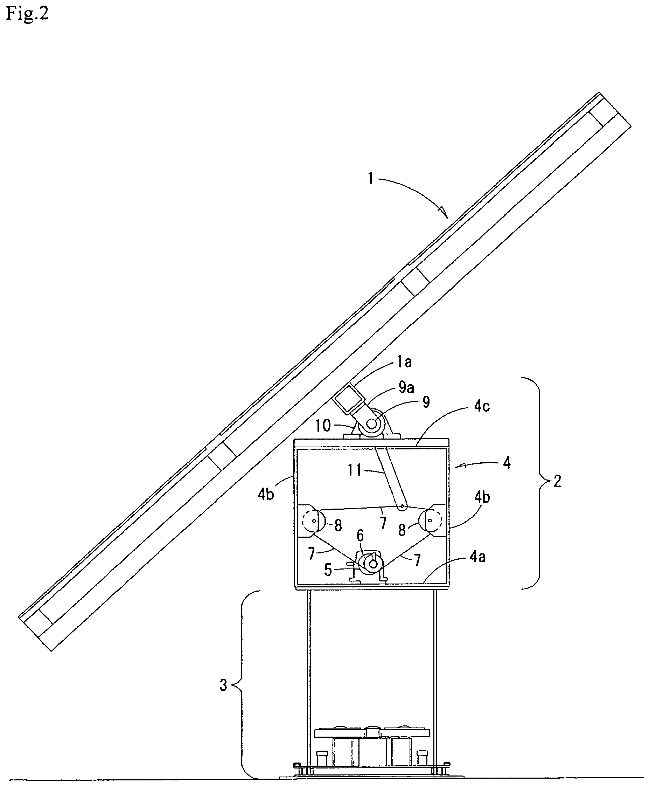

A preferable embodiment of the present invention will be discussed below with reference to the accompanying drawings. Fig. 1 is a perspective view illustrating a solar power generation system according to one embodiment of the present invention, wherein an internal structure is seen through, and Fig. 2 is a side view thereof in which a box-like structure at an upper part is a supporting portion for a solar panel 1, and a cylindrical structure at a lower part is a revoluting portion 3.

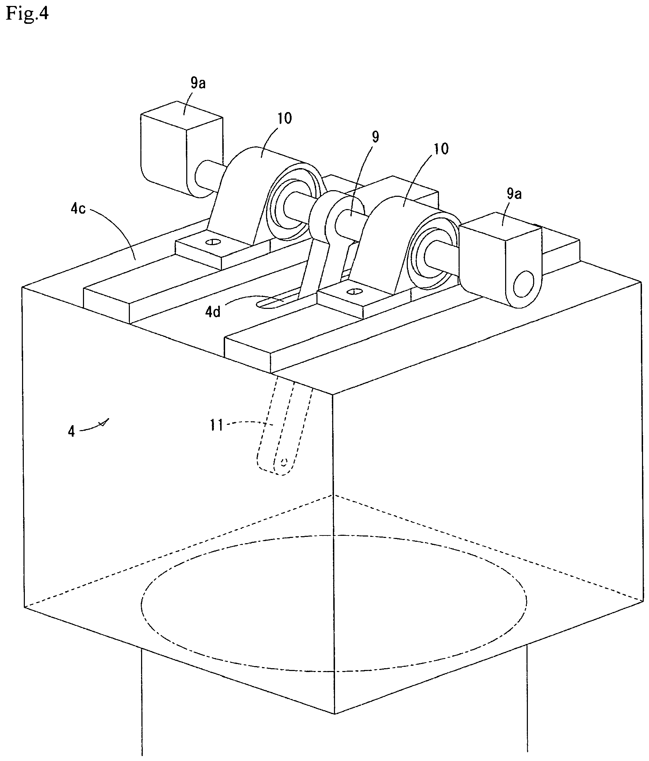

A supporting portion 2 supports the solar panel 1 so as to be swung in one direction in the horizontal direction (same as the horizontal direction in the drawing) corresponding to the east-west orientation in a predetermined angular range. The specific structure of the supporting portion 2 is such that, as is apparent from Figs. 2 to 4, a reel 6 that is driven by an electric motor 5 serving as a power source is provided inside a housing 4, which is formed from an appropriate material such as a metal plate, so as to be fixed on a housing bottom plate 4a, and a pair of pulleys 8 around which a wire 7 fed out from the reel 6 is looped are provided on both of left and right side plates 4b and 4b of the housing 4 on the same level. The supporting portion 2 also includes, on a housing top plate 4c, a horizontal rotation axis 9 extending in the longitudinal direction (north-south orientation) and a bearing 10 into which the rotation axis 9 is inserted so as to be freely rotatable in both the normal direction and reverse direction. In the present embodiment, a pair of bearings 10 are provided with a predetermined space therebetween in the longitudinal direction as illustrated in Fig. 4.

Mounting portions 9a are provided at both ends of the rotation axis 9. The mounting portions 9a are bonded to a crossbar 1a provided at the center on the back of the solar panel 1 along the longitudinal direction, whereby the solar panel 1 and the rotation axis 9 are integrated.

An actuator 11 projects downward from the rotation axis 9. The actuator 11 has a lever-like shape, and serves as a pendulum such that its lower end can make a horizontal reciprocating movement with the rotation axis 9 as a supporting point since its upper end is integrally fixed to the center of the rotation axis 9, and this reciprocating movement enables the rotation axis 9 to rotate in the normal direction and the reverse direction.

In the present embodiment, the actuator 11 projects in the housing 4 through a slit 4d formed between the bearings 10 on the housing top plate 4c, and both ends of the wire 7 fed out from the reel 6 through the pulleys 8 are connected to one point of the lower end. Therefore, when the electric motor 5 is driven to rotationally drive the reel 6, one end of the wire 7 is wound around the reel 6, so that the lower end of the actuator 11 is pulled toward this direction, resulting in rotating the rotation axis 9. When the electric motor 5 is driven to rotate in the reverse direction, the opposite end of the wire 7 is then wound around the reel 6, so that the lower end of the actuator 11 is pulled toward the opposite direction, resulting in rotating the rotation axis 9 in the reverse direction.

With the above-described operation, the solar panel 1 swings with the rotation axis 9 as a supporting point so as to move in a predetermined angular range between the horizontal state and the state of being tilted at an arbitrary tilt angle in one direction. In the present invention, the solar panel 1 is configured not to swing to the left and to the right in the same angular range from the horizontal state but to swing either to the left or to the right from the horizontal state. Thus, the tilt control angle of the solar panel 1 can be decreased, whereby the swing of the solar panel 1, which has a large area and is a heavy load, can be facilitated and reliably implemented.

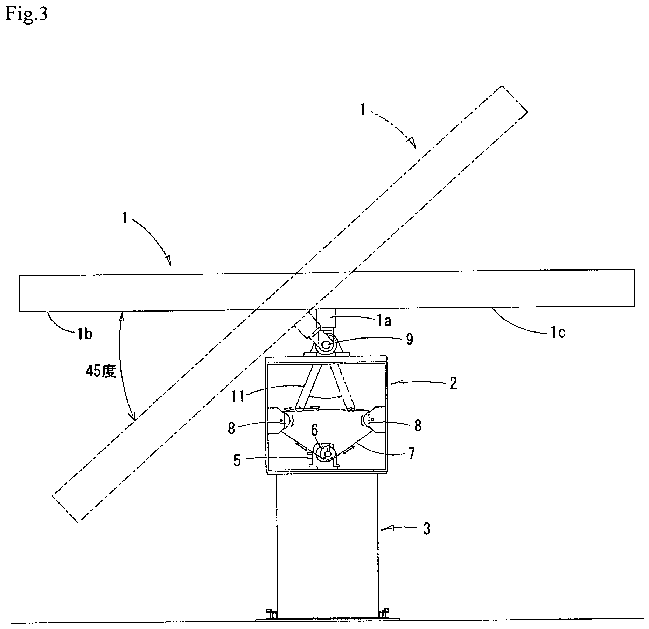

That is, in the present embodiment, the actuator 11 is not perpendicular to the panel surface of the solar panel 1, but is provided with an angle as briefly illustrated in Fig. 3. Specifically, the upper end of the actuator 11 is fixed to the rotation axis 9 at an angle so as to form an acute angle with a panel surface of the solar panel 1 at the side swinging downward from a horizontal line from the horizontal state of the solar panel 1, that is, a left panel surface 1b out of left and right panel surfaces 1b and 1c which are sectioned with the crossbar 1a as a centerline. Accordingly, while the actuator 11 reciprocates to the left and right across a vertical line vertically passing through the rotation axis 9, the solar panel 1 is tilted only to the left from the horizontal state in the present embodiment.

In the present embodiment, the mounting angle of the actuator 11 is arbitrary. However, it is preferable that the angle (swing angle) with the vertical line is the same at the left and right sides in each of the horizontal state and the maximum tilt state of the solar panel 1. With this configuration, when the solar panel 1 is swung between the horizontal state and the maximum tilt state, the electric motor 5 serving as the power source and the reel 6 can be driven to rotate at the same rotation angle in the normal direction and in the reverse direction, which facilitates the motor control. In addition, since the swing angle of the actuator 11 becomes symmetric, the center of gravity of the housing 4 (supporting portion 2) can be stabilized.

As described above, the supporting portion 2 of the present invention has only the function of swinging the solar panel 1 either to the left or right. However, in the present invention, the supporting portion 2 is supported by the revoluting portion 3 so as to be rotatable in the horizontal direction. Therefore, the present invention implements the swing of the solar panel 1 both to the left and right in the same angular range as a whole.

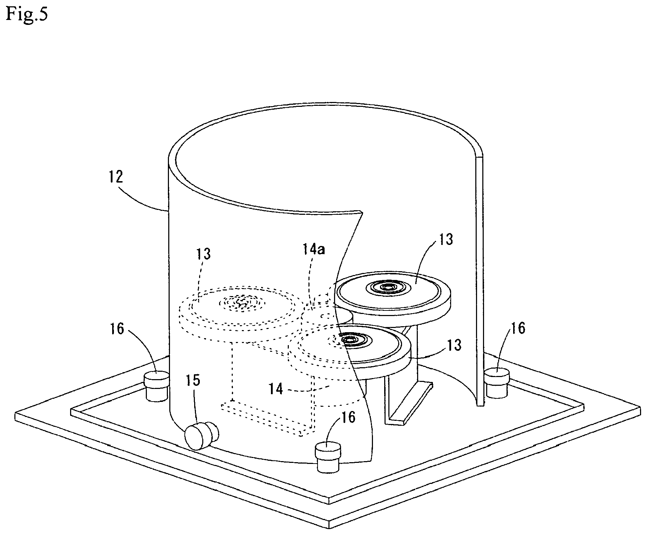

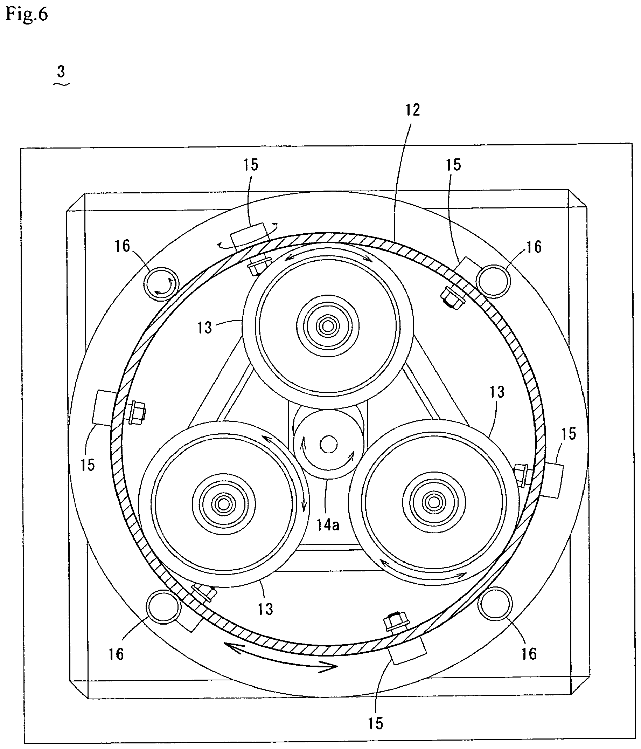

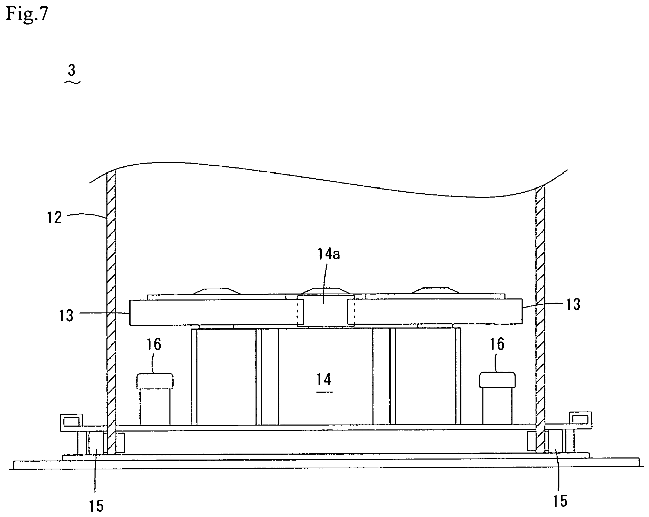

As illustrated in detail in Figs. 5 to 7, the revoluting portion 3 includes a hollow cylindrical rotary drum 12 provided with the supporting portion 2 on a cylinder. The revoluting portion 3 also includes, as its power source, three horizontally rotating rollers 13 disposed in the rotary drum 12 and an electric motor 14 provided at the center of these three rollers 13.

The rotary drum 12 is a hollow cylinder formed from an appropriate material such as a metal pipe, and has a vertical cylinder axis. The rotary drum 12 has on its lower part a plurality of rollers (wheels) 15 rotating in the circumferential direction, thereby implementing 360-degree horizontal rotation around the cylinder axis (synonymous with the vertical axis). It is to be noted that cam follower rollers 16 are provided around the rotary drum 12 so as to be in contact with the outer peripheral surface of the rotary drum 12, and they restrict the rotation position of the rotary drum 12. Notably, the same element may be used for the rollers 15 and the cam follower rollers 16.

In the present embodiment, the power source is provided in the rotary drum 12. The electric motor 14 is vertically disposed coaxially with the cylinder axis (rotation axis) of the rotary drum 12 at the center of the rotary drum 12, and three rollers 13 are disposed around the electric motor 14 so as to form a triangle. A columnar wheel 14a with a diameter inscribed in three rollers 13 is mounted to a pinion shaft of the electric motor 14, and when the electric motor 14 is driven, the three rollers 13 are simultaneously rotated in the same direction through the wheel 14a. Naturally, if the electric motor 14 is driven to be rotated in the reverse direction, the three rollers 13 are simultaneously rotated in the reverse direction. Notably, the electric motor is preferably a geared motor, for example. However, other electric motor may be provided.

Since the outer peripheral surfaces of these three rollers 13 are in contact with the inner peripheral surface of the rotary drum 12, the rotary drum 12 is rotated in the horizontal direction through the three rollers 13 due to the drive of the electric motor 14.

Notably, the outer peripheral surface of each of the rollers 13 in contact with the rotary drum 12 is preferably formed from a rubber layer. This is because the rotary drum 12 can be reliably and accurately rotated with the friction force. For example, a tire for vehicles may be provided. If a tire for vehicles is provided, a run flat tire that can keep the contact pressure (friction force) with the rotary drum 12 for a long time after being punctured is more preferably used.

According to the above-mentioned revoluting portion 3, when the electric motor 14 is driven, the three rollers 13 that are in contact with the wheel 14a mounted to the pinion shaft are simultaneously rotated in the direction opposite to the rotating direction of the electric motor 14, and thus, the rotary drum 12 is rotated in the direction same as the rotating direction of the rollers 13. The supporting portion 2 placed on the rotary drum 12 is also rotated with the solar panel 1 in the horizontal direction.

If the rotary drum 12 is rotated 180 degrees with the operation of the revoluting portion 3, the solar panel 1 is in the state of being reversed left to right. If the rotary drum 12 is again rotated 180 degrees in the same direction or in the opposite direction, the solar panel 1 can be returned to the original left-right state.

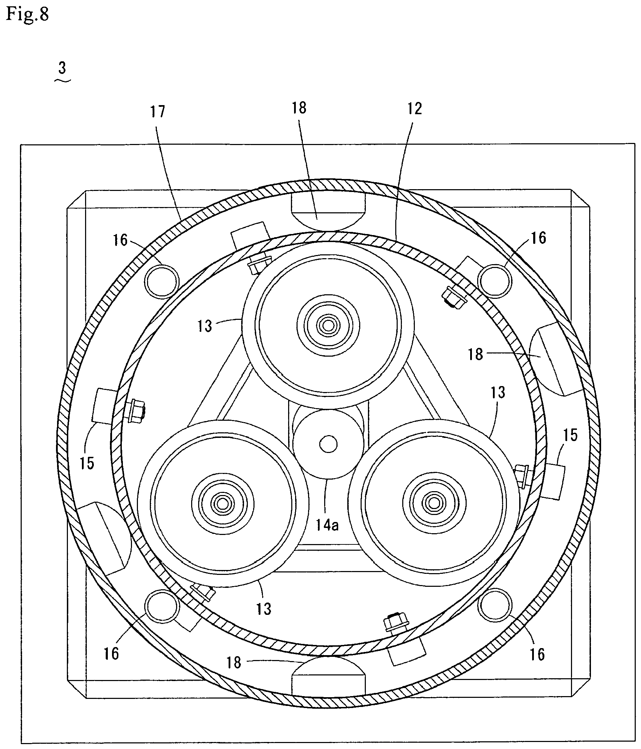

When the solar panel 1 receives a strong wind, a great force is exerted on the rotary drum 12. In order to reinforce the rotary drum 12, a reinforcement drum 17 is concentrically fixed to the outer periphery of the rotary drum 12, and bearings 18 are interposed between both drums 12 and 17 as illustrated in Fig. 8. This configuration can prevent the rotary drum 12 from collapsing without hindering the horizontal rotation of the rotary drum 12.

An example (control example) of the operation of the solar power generation system will be discussed. The solar power generation system is firstly installed such that the horizontal direction in which the solar panel 1 is swung coincides with the east-west orientation, and waits until sunrise in an initial state in which the solar panel 1 is tilted at an angle of 45 degrees to the left (to the east) by controlling the supporting portion 2. At sunrise, solar irradiation by which solar power generation is enabled is detected by an optical sensor or an illumination sensor, for example, and the supporting portion 2 is controlled on the basis of the detection signal. With this, the solar panel 1 is rotated in the direction toward the horizontal state. Generally, the solar panel 1 is preferably brought into the horizontal state around noon at which the culmination altitude of the sun is the highest.

When the solar panel 1 is in the horizontal state, this condition is detected by sensors, such as a level gauge or a limit switch, timers such as an alarm watch that detects noon, or other units, to control the revoluting portion 3. That is, when the solar panel 1 is in the horizontal state, the rotary drum 12 is horizontally rotated 180 degrees to cause the solar panel 1 to be reversed left to right.

After such reverse operation is completed, the supporting portion 2 is continuously controlled to then rotate the electric motor 5 in the supporting portion 2 in the direction opposite to the direction so far (in the morning). With this, the solar panel 1 is rotated until it is tilted to the west at an angle of 45 degrees.

According to the operation discussed above, the solar panel 1 can be rotated to the left and right within the range of 90 degrees by tracking the movement of the sun in the daytime.

After the daytime operation described above is finished due to sunset or the like, the revoluting portion 3 is controlled to cause the solar panel 1 to be again reversed left to right. Thus, the solar panel 1 can be returned to the initial state.

As described above, in the solar power generation system according to the present embodiment, the tilt control angle of the solar panel 1 by the supporting portion 2 is 45 degrees at only one side, but due to the reverse operation by the revoluting portion 3, the solar panel 1 can be swung at both sides within the range of 90 degrees. Therefore, the tilt control for the solar panel 1 includes the control for bringing the solar panel 1 into the horizontal state from the initial state at an angle of 45 degrees, and the control for tilting the solar panel 1 at an angle of 45 degrees from the horizontal state. Since the former control (operation control in the morning) requiring particularly large motor torque is performed only once, the power consumption of the electric motor 5 can be further reduced than conventional systems.

In the present invention, the electric motor 14 is also required in the revoluting portion 3, and power is consumed in the revoluting portion 3. However, only a power consumption amount smaller than that for swinging the solar panel 1 is required. In addition, during the reverse operation around noon as discussed in the above operation example, the solar panel 1 is in the horizontal state, so that the air resistance is small. Therefore, power consumption is further reduced.

It is obvious that the present invention is not limited to the above embodiment. In the swing mechanism for the solar panel 1 in the supporting portion 2, the reciprocating movement of the actuator 11 may be implemented by a link mechanism or the like in place of the wire 7, or the actuator 11 may be eliminated and power of the electric motor 5 may be directly transmitted to the rotation axis 9 using gears or the like.

Further, in the revoluting portion 3, the power source for rotationally driving the rotary drum 12 may be configured such that the rollers 13 are disposed outside the rotary drum 12, or may be configured such that the rollers 13 are replaced by gears, the rotary drum 12 is also provided with gears meshing with the gears, and the rotary drum 12 is horizontally rotated by such a gear structure.

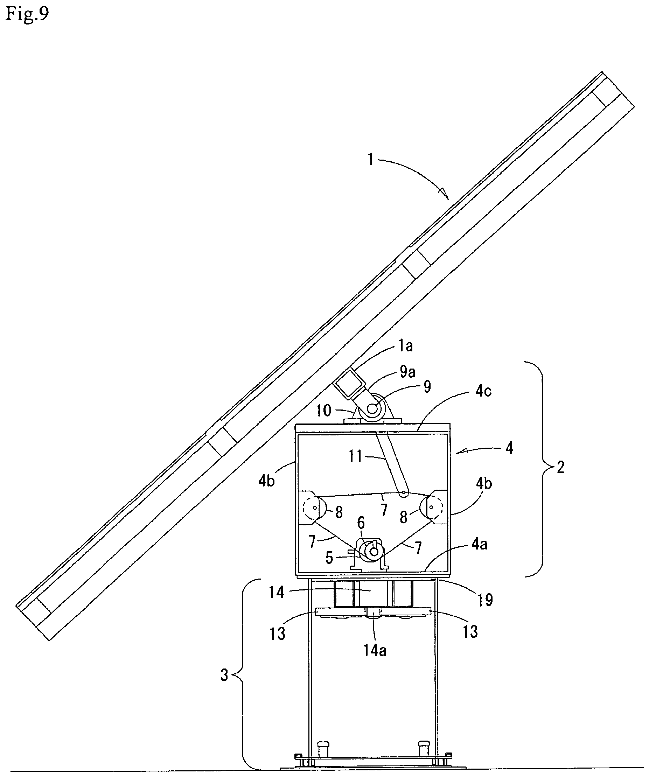

As illustrated in Fig. 9, the revoluting portion 3 may be configured such that the rollers 13 and the electric motor 14, which are the power unit of the revoluting portion 3, are provided on a horizontal plate 19 provided on the top surface of the rotary drum 12 in the inverted way of the above-mentioned embodiment. In this modification, the power unit of the revoluting portion 3 is located at the upper part of the rotary drum 12, whereby the center of gravity of the entire device can be stabilized.

In addition, the drive control of the supporting portion 2 and the revoluting portion 3 is arbitrary. In the above embodiment, the movement in one day has been discussed with the initial state being set as the state in which the solar panel 1 is tilted at an angle of 45 degrees. However, the horizontal state may be defined as the initial state. In this case, when the sunlight (sunrise) is detected by the optical sensor or the like at the beginning of the day, the solar panel 1 is driven to be tilted at an angle of 45 degrees, and then, is swung until it is brought into the horizontal state. Then, the solar panel 1 is reversed by the revoluting portion 3 and is tilted at an angle of 45 degrees at the opposite side, and when the optical sensor no longer detects the sunlight (in other words, when sunset is detected), the solar panel 1 is again returned to the horizontal state that is the initial state. If the horizontal state is defined as the initial state as described above, the resistance of wind exerted on the solar panel 1 is reduced, and the problem of damage with wind during a standby state at night in the initial state can be reduced.

In addition, the supporting portion 2 and the revoluting portion 3 may be simultaneously driven, and in this case, the solar panel 1 can be three-dimensionally controlled. Thus, in autumn or winter in Japan or at a land at which the culmination altitude of the sun is low, the solar panel 1 can be effectively controlled to face the sunlight to enhance power generation efficiency.

## Claims

1. A solar power generation system characteristic of:
a supporting portion that supports a solar panel so as to be capable of being swung within a range in which the solar panel is tilted at an arbitrary angle in only one direction from a horizontal state; and
a revoluting portion that supports the supporting portion from below so as to be rotatable around a vertical axis.

2. The solar power generation system according to claim 1, wherein the revoluting portion supports the supporting portion so as to be rotatable in such a manner that a swing range of the solar panel is reversed with the vertical axis being defined as a symmetric axis, enabling the solar panel to swing in both directions within the same range before and after the rotation of the revoluting portion.

3. The solar power generation system according to claim 2, wherein the revoluting portion is rotatable within a range of 180 degrees in normal and reverse directions around the vertical axis.

4. The solar power generation system according to claim 1, wherein the revoluting portion is rotationally driven when the solar panel is in the horizontal state.

5. The solar power generation system according to claim 1, wherein the supporting portion and the revoluting portion are simultaneously driven.

6. The solar power generation system according to claim 1, wherein an arbitrary tilt angle of the solar panel is a maximum of 45 degrees.

7. The solar power generation system according to claim 1, wherein
the supporting portion further includes:
a rotation axis provided at a center of a back of the solar panel;
an actuator that integrally projects from the rotation axis obliquely downward and performs a reciprocating movement in a swing direction of the solar panel; and
a power source for the supporting portion, the power source operating the actuator so as to be capable of performing the reciprocating movement, and
the actuator projects from the rotation axis so as to form an acute angle with a panel surface which is swung downward when the solar panel is swung.

8. The solar power generation system according to claim 1, wherein
the revoluting portion further includes:
a rotary drum that supports the supporting portion on a cylinder so as to be rotatable in a horizontal direction;
a roller that has an outer peripheral surface in contact with a cylinder wall of the rotary drum and is freely rotatable in the horizontal direction; and
a power source for the revoluting portion, the power source applying power to the roller to rotationally drive the rotary drum.

9. The solar power generation system according to claim 8, wherein the rotary drum has a hollow cylindrical shape, and the roller is mounted inside the rotary drum.

10. The solar power generation system according to claim 8, wherein a reinforcement drum is concentrically disposed outside the rotary drum through a bearing.
